# EUROPEAN PATENT APPLICATION

(11) **EP 4 398 458 A1**
(43) Date of publication of application: **10.07.2024**
(21) Application number: 23150496.0
(22) Date of filing: 05.01.2023
(51) Int. Cl.: H02K 1/276

(54) **ROTOR FOR A PERMANENT MAGNET ROTATING ELECTRICAL MACHINE**

(71) Applicant: GE Energy Power Conversion Technology Ltd, Rugby, Warwickshire CV21 1BD (GB)
(72) Inventor: PATEL, Vipulkumar, RUGBY, CV21 1BD (GB); COSTELLO, Glyn, RUGBY, CV21 1BD (GB); YABIKU, Renato, RUGBY, CV21 1BD (GB)
(74) Representative: Serjeants LLP

(57) **Abstract**

A rotor (2) for a rotating electrical machine is described. The rotor (2) includes a rotor body (8) having an axis of rotation and at least one pair of circumferentially-adjacent pole modules (12a, 12b; 12c, 12d). Each pole module (12a, 12b, ..., 12d) includes a main body (14) and a permanent magnet (16a, 16b, ..., 16d). At least one of each pair of pole modules (12a; 12d) is rotatable relative to the rotor body (8) between a first position for normal operation where the magnetic fields generated by the permanent magnets (16a, 16b; 16c, 16d) of each pair of pole modules (12a, 12b; 12c, 12d) extend outside the rotor body (8) and a second position for fault operation where the magnetic fields generated by the permanent magnets (16a, 16b; 16c, 16d) of each pair of pole modules (12a, 12b; 12c, 12d) do not extend substantially outside the rotor body (8).

## Description

### Technical Field

The present invention relates to a rotor for a permanent magnet rotating electrical machine, e.g., a motor or generator.

### Summary of the invention

The present invention provides a rotor for a rotating electrical machine (e.g., a motor or generator), the rotor comprising a rotor body having an axis of rotation and at least one pair of circumferentially-adjacent pole modules, each pole module comprising a main body and a permanent magnet, wherein at least one of each pair of pole modules is rotatable relative to the rotor body between a first position for normal operation where the magnetic fields generated by the permanent magnets of each pair of pole modules extend outside the rotor body (e.g., into an air gap that separates the rotor from a stator of the rotating electrical machine) and a second position for fault operation where the magnetic fields generated by the permanent magnets of each pair of pole modules do not extend substantially outside the rotor body. For convenience, a pole module that is rotatable relative to the rotor body is referred to below as a "rotatable pole module".

During normal operation of the electrical machine, the magnetic fields generated by the permanent magnets of the pole modules typically define a plurality of rotor poles that are arranged circumferentially around the rotor body. By rotating each rotatable pole module relative to the rotor body if a fault is detected, the magnetic fields generated by the permanent magnets can remain substantially within the rotor body and the air gap flux can be reduced to as close to zero as possible. The permanent magnets can therefore effectively be turned off. The fault may be a fault within the rotating electrical machine or an external fault. In one example, the fault may be a stator inter-turn fault (ITF). It is normally important to prevent any further rotation of the rotor in the event of an ITF being detected. Because the permanent magnets cannot normally be turned off, and will continue to generate a magnetic field, stopping the rotor is normally the only way to prevent fault current from continuing to be generated within the stator. But it may also be important that the rotor shaft is still allowed to rotate. The present method therefore provides a way of turning off the permanent magnets so that the rotor and rotor shaft may be allowed to rotate if required.

The rotor may comprise any suitable number of pairs of circumferentially-adj acent pole modules. Typically, the rotor will comprise between two and eighteen pairs of pole modules - i.e., a total of between four and thirty-six pole modules - so that the rotor has between two and eighteen rotor poles during normal operation of the electrical machine.

The pairs of pole modules are circumferentially spaced around the rotor body.

At least one of each pair of pole modules is a rotatable pole module.

Each pole module extends along the axis of the rotor body. Each rotatable pole module may be rotatable about an axis substantially parallel with the axis of rotation of the rotor body. Each rotatable pole module may be rotatable through an angle between about 45 degrees and about 180 degrees relative to the rotor body, for example.

The rotor body may include a plurality of axially-extending openings, each opening may be sized and shaped to receive a corresponding pole module. The openings are circumferentially spaced around the rotor body. The pole modules may therefore be pre-formed as self-contained components and may be inserted into the openings in the rotor body during the rotor assembly process. Each pole module may be inserted axially into the corresponding opening in the rotor body - i.e., a pole module may be moved in the axial direction during an insertion process and also during a removable process if it is necessary to remove a pole module from the rotor body. Once inserted, each pole module may be secured in position within the rotor body so that further movement in the axial direction is prevented unless a pole module needs to be removed from the rotor body.

The main body of each pole module may have a solid or laminated construction. For example, the main body may be formed from a stack of thin lamination sheets that are stamped or cut to have an outer profile that defines the outer surface of the pole module. The lamination sheets may be stacked together in the axial direction to form the main body of each main body.

The main body of each pole module may include an axially-extending opening for receiving the permanent magnet. The permanent magnet may comprise one or more blocks of permanent magnet material located end-to-end in the opening in the main body. In practice, permanent magnet material may be arranged or embedded in the main body of each pole module in any suitable way. The permanent magnet of each pole module may have a substantially rectangular cross-section, for example. The permanent magnet of each pole module may comprise a pole surface of north polarity and an opposite pole surface of south polarity. One or more air pockets or spaces may be provided between the permanent magnet and the surrounding main body of each pole module to minimise flux leakage around the permanent magnet.

Both pole modules of each pair of pole modules may be rotatable relative to the rotor body - i.e., they may both be rotatable pole modules. Alternatively, the other one of each pair of pole modules may be fixed relative to the rotor body. For convenience, a pole module that is fixed relative to the rotor body is referred to below as a "fixed pole module".

Each rotatable pole module may have a substantially cylindrical outer surface and may be received in an opening in the rotor body having a substantially cylindrical inner surface. Such a configuration with complementary cylindrical surfaces may conveniently allow for relative rotation between each rotatable pole module and the surrounding rotor body. But it will be readily understood that other shapes and configurations that will permit relative rotation are possible. Relative rotation in response to a detected fault may be facilitated by using a bearing or other freely-rotatable structure between each rotatable pole module and the rotor body, for example. The outer surface of each fixed pole module may have any suitable shape or configuration that may be designed to prevent relative rotation relative to the rotor body. Each fixed pole module may also be fixed relative to the rotor body by one or more mechanical fixings such as bolts or screws, for example.

Each pole module may include one or more lifting features and/or rotating features. A lifting feature may be designed to allow the pole module to be lifted or moved during assembly or manufacture, e.g., when a pre-formed pole module is being inserted or installed into the rotor body, or when it is removed from the rotor body. A rotating feature may be designed to allow an inserted pole module to be rotated relative to the rotor body. A rotating feature may be a handle that allows for manual rotation, or it may allow for an external tool, an actuator or a handle to be fitted to the pole module in order to rotate it, for example. A lifting feature and/or a rotating feature may be provided on at least one axial end of each pole module. In one arrangement, the rotatable and fixed pole modules are provided with one or more lifting features whereas only the rotatable pole modules are provided with one or more rotating features.

In one arrangement, when each rotatable pole module is in the first position for normal operation, the permanent magnets of each pair of pole modules are substantially arranged such that the facing pole surfaces (i.e., the surfaces of the permanent magnets that are generally facing towards each other) have the same polarity - i.e., north polarity and north polarity or south polarity and south polarity. The permanent magnets of each pair of pole modules may be arranged generally in a V-shape where the open end of the v-shape points towards the air gap during normal operation. When each rotatable pole module is in the second position for fault operation, the facing pole surfaces may have opposite polarity - i.e., north and south polarity.

The present invention further provides a rotating electrical machine (e.g., a motor or generator) comprising a rotor as herein described, and a stator spaced apart from the rotor by an air gap. The rotor may be arranged radially inside an outer stator so that the annular air gap is defined between a radially outer surface of the rotor and a radially inner surface of the stator. The rotor may also be arranged radially outside an inner stator so that the annular air gap is defined between a radially inner surface of the rotor and a radially outer surface of the stator.

The present invention further provides a method of operating a rotor for a rotating electrical machine (e.g., a motor or generator) in response to a detected fault, the rotor comprising a rotor body having an axis of rotation and at least one pair of circumferentially-adjacent pole modules, each pole module comprising a main body and a permanent magnet, the method comprising:
rotating at least one of each pair of pole modules from a first position where the magnetic fields generated by the permanent magnets of each pair of pole modules extend outside the rotor body (e.g., into an air gap that separates the rotor from a stator of the rotating electrical machine) to a second position where the magnetic fields generated by the permanent magnets of each pair of pole modules do not extend substantially outside the rotor body.

Each rotatable pole module may be rotated by any suitable means, including manually using a handle at an axial end of the pole module, or by using an external tool or actuator such a servo motor or hydraulic jack. The external tool or actuator may be fitted to a rotating feature provided on an axial end of each rotatable pole module, for example. Each rotatable pole module may also be fixed in position during normal operation and then released if a fault is detected so that it is allowed to freely rotate towards the second position by the magnetic forces acting on each rotatable pole module.

The present invention further provides a method of assembling a rotor for a rotating electrical machine (e.g., a motor or generator) comprising:
providing a rotor body with a pair of axially-extending, circumferentially-adjacent openings;
providing a pair of pre-formed pole modules, each pole module comprising a main body and a permanent magnet; and
inserting each pole module into a corresponding opening in the rotor body;
wherein at least one of the pair of pole modules is rotatable between a first position for normal operation where the magnetic fields generated by the permanent magnets of the pair of pole modules extend outside the rotor body (e.g., into an air gap that separates the rotor from a stator of the rotating electrical machine) and a second position for fault operation where the magnetic fields generated by the permanent magnets of the pair of pole modules do not extend substantially outside the rotor body.

Assembling a rotor by inserting pre-formed pole modules into the rotor body is quick and easy.

### Drawings

Figure 1 is an end view of part of a rotor and stator of an electrical machine according to the present invention without pole modules installed;
Figure 2 is a perspective view of a pole module according to the present invention;
Figure 3 is an end view of part of the rotor of Figure 1 with pole modules installed and arranged in a first position; and
Figure 4 is an end view of part of the rotor of Figure 1 with pole modules installed and arranged in a second or fault position.

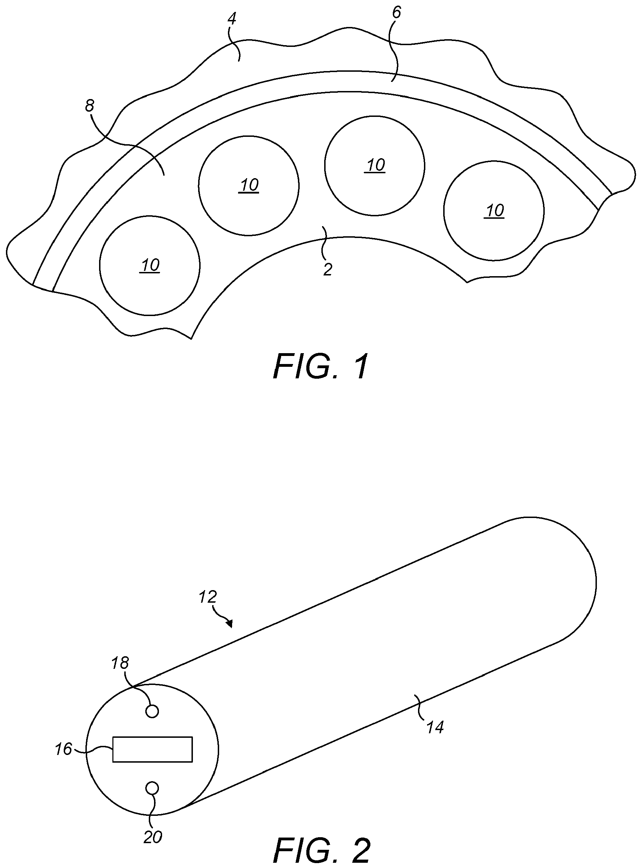

Referring to Figure 1, an electrical machine, e.g., a permanent magnet synchronous machine (PMSM), comprises a rotor 2 and a stator 4 with a stator winding (not shown). The rotor 2 and the stator 4 are spaced apart by an annular air gap 6.

The rotor 2 includes a rotor body 8 having an axis of rotation and a plurality of axially-extending openings 10. Each opening 10 is sized and shaped to receive a pre-formed pole module 12. The openings 10 are circumferentially spaced around the rotor body 8 as shown. Although only four openings are shown, it will be readily understood that additional openings will be provided in the rotor body and that the rotor body will include additional pairs of pole modules.

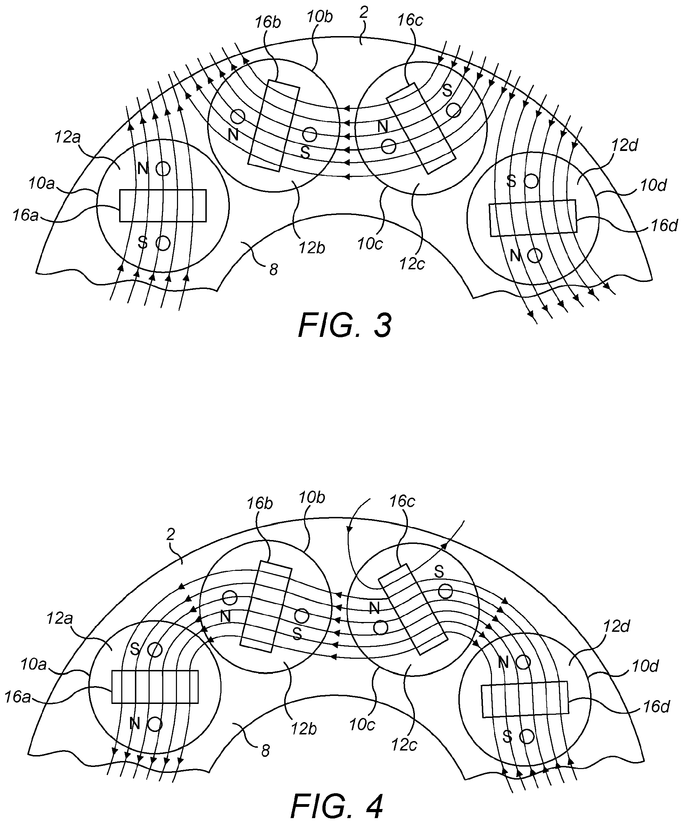

A single pole module 12 is shown in Figure 2 and includes a main body 14 and a permanent magnet 16. The main body 14 has a laminated construction and is formed from a stack of thin lamination sheets that are stamped or cut to have an outer profile that defines the outer surface of the pole module 12 and which are stacked together in the axial direction. The permanent magnet 16 is received in an axially-extending opening in the main body 14. The opening may be defined by aligned openings formed in each individual lamination sheet. The permanent magnet 16 may comprise one or more blocks of permanent magnet material located end-to-end in the main body 14. The permanent magnet 16 may have a substantially rectangular cross-section with a pole surface of north polarity (labelled "N" in Figures 3 and 4) and an opposite pole surface of south polarity (labelled "S" in Figures 3 and 4).

The axial end of the pole module 12 includes a lifting feature 18 and a rotating feature 20. The lifting rotating feature 18 is designed to allow the pole module 12 to be lifted or moved during assembly or manufacture, e.g., when the pre-formed pole module is being inserted or installed into the rotor body 8, or when it is removed from the rotor body. The rotating feature 20 is designed to allow an inserted pole module 12 to be rotated relative to the rotor body 8. The rotating feature 20 may allow for an external tool, actuator or handle to be fitted to the pole module 12 in order to rotate it, for example. Although not shown in Figure 2, another lifting feature and another rotating feature are provided on the other axial end of the pole module 12.

Figures 3 and 4 shows two pairs of pole modules inserted in the rotor body 8.

A first pair of pole modules 12a, 12b are inserted into a corresponding pair of openings 10a, 10b. A second pair of pole modules 12c, 12d are inserted into a corresponding pair of openings 10c, 10d.

In this arrangement, the pole modules 12a, 12d are "rotatable pole modules" and are rotatable relative to the rotor body 8 and the pole modules 12b, 12c are "fixed pole modules" and are not rotatable. In other arrangements, all of the pole modules may be rotatable pole modules.

The rotatable pole modules 12a, 12d have a substantially cylindrical outer surface and are received in corresponding openings 10a, 10d having a substantially cylindrical inner surface. Such a configuration may conveniently allow for relative rotation between each rotatable pole module 12a, 12d and the surrounding rotor body 8. Although the outer surface of each fixed pole module 12b, 12c may have any suitable shape or configuration that prevents rotation relative to the rotor body 8, they are also shown as having a substantially cylindrical outer surface and are received in corresponding openings 10b, 10c having a substantially cylindrical inner surface. The fixed pole modules 12b, 12c may be fixed using one or more mechanical fixings such as bolts or screws (not shown).

In Figure 3, the rotatable pole modules 12a, 12d are shown in a first position for normal operation where the magnetic fields generated by the permanent magnets 16a, 16b, ..., 16d of the pole modules 12a, 12b, ..., 12d extend outside the rotor body 8, into the air gap 6, and then link to the stator 4 to produce voltages in the stator winding. The permanent magnets 16a, 16b, ..., 16d shown in Figure 3 define a pair of rotor poles. More particularly, the magnetic fields generated by the permanent magnets 16a, 16b of the first pair of pole modules 12a, 12b define a rotor pole of north polarity and the magnetic fields generated by permanent magnets 16c, 16c of the second pair of pole modules 12c, 12d define a rotor pole of south polarity. It will be readily understood that additional rotor poles of alternating north and south polarity will be defined by additional pairs of pole modules that are not shown in Figures 3 and 4. In the first position, permanent magnets 16a, 16b of the first pair of pole modules 12a, 12b are substantially arranged such that the facing pole surfaces (i.e., the surfaces of the permanent magnets that are generally facing towards each other) have the same polarity. More particularly, the facing pole surfaces both have a north polarity. In the first position, permanent magnets 16c, 16d of the second pair of pole modules 12c, 12d are substantially arranged such that the facing pole surfaces have the same polarity. More particularly, the facing pole surfaces both have a south polarity.

In Figure 4, the rotatable pole modules 12a, 12d are shown in a second position for fault operation where the magnetic fields generated by the permanent magnets 16a, 16b, ..., 16d of the pole modules 12a, 12b, ..., 12d do not extend substantially outside the rotor body 8. The rotatable pole modules 12a, 12d are rotatable about an axis substantially parallel with the axis of rotation of the rotor body and in this particular example are rotated by about 180 degrees.

The rotatable pole modules 12a, 12d may be rotated by any suitable means, including manually using a handle fitted to an axial end of the pole module or by using an external tool or actuator such a servo motor or hydraulic jack, for example. The external tool or actuator may be connected to the rotating feature 20 of each rotatable pole module 12a, 12d.

In the second position, permanent magnets 16a, 16b of the first pair of pole modules 12a, 12b are substantially arranged such that the facing pole surfaces (i.e., the surfaces of the permanent magnets that are generally facing towards each other) have the opposite polarity. More particularly, the facing pole surfaces have a south polarity and a north polarity. In the second position, permanent magnets 16c, 16d of the second pair of pole modules 12c, 12d are substantially arranged such that the facing pole surfaces have the opposite polarity. More particularly, the facing pole surfaces have a south polarity and a north polarity.

By rotating the rotatable pole modules 12a, 12d if a fault is detected from the first position shown in Figure 3 to the second position shown in Figure 4, the magnetic fields generated by the permanent magnets 16a, 16b, ..., 16d remain substantially within the rotor body and the air gap flux can be reduced to as close to zero as possible. In practice, it may not be possible to reduce the air gap flux to exactly zero and Figure 4 shows a stray magnetic field that still extends outside the rotor body 8. However, it is clear that by rotating the rotatable pole modules 12a, 12d the permanent magnets 16a, 16b, ..., 16d can effectively be turned off. The fault may be a stator inter-turn fault (ITF) that may be detected in a conventional way. It is normally important to prevent any further rotation of the rotor in the event of an ITF being detected. Because the permanent magnets 16a, 16b, ..., 16d cannot normally be turned off, and will continue to generate a magnetic field, stopping the rotor 2 is normally the only way to prevent fault current from continuing to be generated within the stator 4. The present method provides a way of turning off the permanent magnets 16a, 16b, ..., 16d so that the rotor 2 and rotor shaft may be allowed to rotate if required.

## Claims

1. A rotor (2) for a rotating electrical machine, the rotor (2) comprising a rotor body (8) having an axis of rotation and at least one pair of circumferentially-adjacent pole modules (12a, 12b; 12c, 12d), each pole module (12a, 12b, ..., 12d) comprising a main body (14) and a permanent magnet (16a, 16b, ..., 16d), wherein at least one of each pair of pole modules (12a; 12d) is rotatable relative to the rotor body (8) between a first position for normal operation where the magnetic fields generated by the permanent magnets (16a, 16b; 16c, 16d) of each pair of pole modules (12a, 12b; 12c, 12d) extend outside the rotor body (8) and a second position for fault operation where the magnetic fields generated by the permanent magnets (16a, 16b; 16c, 16d) of each pair of pole modules (12a, 12b; 12c, 12d) do not extend substantially outside the rotor body (8).

2. A rotor (2) according to claim 1, wherein the at least one of each pair of pole modules (12a; 12d) is rotatable about an axis substantially parallel with the axis of rotation of the rotor body (8).

3. A rotor (2) according to claim 1 or claim 2, wherein the rotor body (8) includes a plurality of axially-extending openings (10a, 10b, ..., 10d), each opening (10a, 10b, ..., 10d) receiving a corresponding pole module (12a, 12b, ..., 12d).

4. A rotor (2) according to any preceding claim, wherein the main body (14) of each pole module (12a, 12b, ..., 12d) has a solid or laminated construction.

5. A rotor (2) according to any preceding claim, wherein the main body (14) of each pole module (12a, 12b, ..., 12d) includes an axially-extending opening for receiving the permanent magnet (16a, 16b, ..., 16d).

6. A rotor according to any preceding claim, wherein both of each pair of pole modules are rotatable relative to the rotor body.

7. A rotor (2) according to any of claims 1 to 5, wherein the other one of each pair of pole modules (12b; 12c) is fixed relative to the rotor body (8).

8. A rotor (2) according to any preceding claim, wherein the at least one of each pair of pole modules (12a; 12d) that is rotatable has a substantially cylindrical outer surface and is received in an opening (10a; 10c) in the rotor body (8) having a substantially cylindrical inner surface.

9. A rotor (2) according to any preceding claim, wherein each pole module (12a, 12b, ..., 12d) includes one or more lifting features (18) and/or one or more rotating features (20).

10. A rotor (2) according to claim 9, wherein a lifting feature (18) and/or a rotating feature (20) is provided on at least one axial end of each pole module (12a, 12b, ..., 12d).

11. A rotor (2) according to any preceding claim, wherein when the at least one of each pair of pole modules (12a; 12d) is in the first position for normal operation, the permanent magnets (16a, 16b; 16c, 16d) of each pair of pole modules (12a, 12b; 12c, 12d) are substantially arranged so that the facing pole surfaces have the same polarity, and when the at least one of each pair of pole modules (12a; 12d) is in the second position for fault operation, the facing pole surfaces have opposite polarity.

12. A rotating electrical machine comprising a rotor (2) according to any preceding claim, and a stator (4) spaced apart from the rotor (2) by an air gap (6).

13. A method of operating a rotor (2) for a rotating electrical machine in response to a detected fault, the rotor (2) comprising a rotor body (8) having an axis of rotation and at least one pair of circumferentially-adjacent pole modules (12a, 12b; 12c, 12d), each pole module (12a, 12b, ..., 12d) comprising a main body (14) and a permanent magnet (16a, 16b, ..., 16d), the method comprising:
rotating at least one of each pair of pole modules (12a; 12d) from a first position where the magnetic fields generated by the permanent magnets (16a, 16b; 16c, 16d) of each pair of pole modules (12a, 12b; 12c, 12d) extend outside the rotor body (8) to a second position where the magnetic fields generated by the permanent magnets (16a, 16b; 16c, 16d) of each pair of pole modules (12a, 12b; 12c, 12d) do not extend substantially outside the rotor body (8).

14. A method according to claim 13, wherein when the at least one of each pair of pole modules (12a; 12d) is in the first position for normal operation, the permanent magnets (16a, 16b; 16c, 16d) of each pair of pole modules (12a, 12b; 12c, 12d) are substantially arranged so that the facing pole surfaces have the same polarity, and when the at least one of each pair of pole modules (12a; 12d) is in the second position for fault operation, the facing pole surfaces have opposite polarity.

15. A method of assembling a rotor (2) for a rotating electrical machine comprising:
providing a rotor body (2) with a pair of axially-extending, circumferentially-adjacent openings (10a, 10b);
providing a pair of pre-formed pole modules (12a, 12b), each pole module (12a, 12b) comprising a main body (14) and a permanent magnet (16a, 16b); and
inserting each pole module (12a, 12b) into a corresponding opening (10a, 10b) in the rotor body (8);
wherein at least one of the pair of pole modules (12a) is rotatable between a first position for normal operation where the magnetic fields generated by the permanent magnets (16a, 16b) of the pair of pole modules (12a, 12b) extend outside the rotor body (8) and a second position for fault operation where the magnetic fields generated by the permanent magnets (16a, 16b) of the pair of pole modules (12a, 12b) do not extend substantially outside the rotor body (8).
